# EUROPÄISCHE PATENTANMELDUNG

(11) **EP 4 223 475 A1**
(43) Veröffentlichungstag der Anmeldung: **09.08.2023**
(21) Anmeldenummer: 22154680.7
(22) Anmeldetag: 02.02.2022
(51) Int. Cl.: B29B 7/84, B29B 7/74, B29B 7/58, B29C 48/00, B29B 7/42, B29B 7/48, B29B 9/06, B29B 17/00

(54) **VORRICHTUNG UND VERFAHREN ZUR WIEDERAUFBEREITUNG VON ZU FLAKES ZERKLEINERTEN UND GEWASCHENEN POST-CONSUMER KUNSTSTOFFABFÄLLEN**

(71) Anmelder: Starlinger & Co Gesellschaft m.b.H., 1060 Wien (AT)
(72) Erfinder: Guggenberger, Jacqueline, 2331 Vösendorf (AT)
(74) Vertreter: Schwarz & Partner Patentanwälte GmbH

(57) **Zusammenfassung**

Die Vorrichtung zur Wiederaufbereitung von Flakes aus zerkleinerten und gewaschenen Post-Consumer Kunststoffabfällen umfasst, in Bearbeitungsrichtung der Kunststoffabfälle gesehen, eine Vorbehandlungseinheit (2) zur Trocknung und Homogenisierung der Flakes aus zerkleinerten und gewaschenen Post-Consumer Kunststoffabfällen, einen Aufschmelzextruder (3) zum Aufschmelzen der in der Vorbehandlungseinheit (2) getrockneten und homogenisierten Kunststoffabfälle, einen Entgasungsextruder (5) zum Entgasen der Kunststoffschmelze, eine Granuliervorrichtung (6) zur Granulierung der Kunststoffschmelze, und eine Nachbehandlungseinheit (8). An einem den Aufschmelzextruder (3), den Entgasungsextruder (5) sowie die Verbindungsleitungen (26) dazwischen umfassenden Kunststoffschmelzepfad (25) ist zumindest ein Prozessgaszulauf (10) und zumindest ein Gasablauf (11) zum Austragen eines Abgasstroms vorgesehen, wobei der zumindest eine Prozessgaszulauf (10) mit einer Ozonquelle (12) oder einer Ozonerzeugungsvorrichtung (13) verbunden ist, wodurch dem Kunststoffschmelzepfad (25) mit Ozon angereichertes Prozessgas zuführbar ist.

## Beschreibung

Die Erfindung betrifft eine Vorrichtung und ein Verfahren zur Wiederaufbereitung von Flakes aus zerkleinerten und gewaschenen Post-Consumer Kunststoffabfällen.

Die Wiederverwendung von Kunststoffmaterialien spielt eine entscheidende Rolle im Sinne einer nachhaltigen Kreislaufwirtschaft. Um dies zu ermöglichen, ist es nötig, insbesondere Post-Consumer Kunststoffabfälle von geruchsintensiven und infektiösen Kontaminationen zu befreien. Bei der Verwendung von Recyclingkunststoff als Lebensmittelverpackung werden besonders hohe Reinheitsanforderungen an den wiederaufbereiteten Kunststoff gestellt. Außerdem muss sichergestellt werden, dass Geschmack, Geruch und Konsistenz der Lebensmittel durch deren aus Recyclingware gewonnener Verpackung nicht beeinträchtigt werden.

Üblicherweise erfolgt eine Aufbereitung von Post-Consumer Kunststoffabfällen, indem diese in einem ersten Schritt zu Flakes/Häckselgut zerkleinert werden und anschließend einem Waschprozess zugeführt werden. Vorzugsweise wird der Waschprozess in einer Heißwäsche unter Zugabe von Natronlauge oder anderen Waschadditiven realisiert, um die Oberfläche zu reinigen.

Ist für die weitere Verwendung eine bestimmte Farbreinheit gefordert, so empfiehlt sich eine optische Vorsortierung der Post-Consumer Kunststoffabfälle vor ihrer Zerkleinerung, gegebenenfalls auch in Kombination mit einer Sortierung nach dem Waschprozess. Die so hergestellten Flakes können im Anschluss daran zu Regranulaten extrudiert werden. Diese Regranulate werden anschließend mittels Heißluft für kürzere Zeit (Stunden bis Tage) oder mit Umgebungsluft für längere Zeit (Tage bis Wochen) belüftet, um den Geruch des Regranulates zu reduzieren.

Um einen entscheidenden Beitrag zu einer positiven Ökobilanz leisten zu können, muss die Aufbereitung von Kunststoffabfällen und deren Aufwertung zu neuwertigen Produkten möglichst Energie sparend, Ressourcen und Umwelt schonend sowie kostengünstig im Vergleich zur Herstellung von Neuware erfolgen. Mit herkömmlichen Entgasungsanlagen ist die Dekontamination von Post-Consumer Abfällen besonders energie- und zeitintensiv, da die verunreinigten Pellets mehrere Stunden einem Heißluftstrom ausgesetzt werden oder unter Vakuum verweilen. Aus der Schrift EP 2507022 B1 sind ein Verfahren und eine Anlage zur Dekontamination von Kunststoffabfällen bekannt, bei denen Flakes zu Pellets extrudiert werden und die solcherart gewonnenen Pellets einer Geruchsreduzierung unterzogen werden, indem Heißluft durch eine Nachbehandlungseinheit geblasen wird, in der die Pellets verweilen.

Aufgabe der vorliegenden Erfindung ist es, einen effizienten und gleichzeitig umweltschonenden Prozess zur Aufbereitung von Post-Consumer Abfällen zu bieten, welcher geruchsneutrales Regranulat liefern kann. Im Idealfall kann mit der vorliegenden Erfindung die Reinigungseffizienz in der Aufbereitung von Post-Consumer Kunststoffen so weit verbessert werden, dass die Aufbereitung lebensmitteltaugliches Regranulat liefert.

Aus dem Dokument CN 108641398 ist es bekannt, Kunststoffflaschen in einer speziellen Waschlösung zu waschen und in einem Mixer bis 180-220 °C mit Ozon zu versetzen. Anschließend kann der Kunststoff granuliert werden.

Das Dokument CA 601047 beschreibt die Behandlung von PET-Stapelfasern und PET-Film mit Ozon bei Raumtemperatur, um eine Bedruckung zu ermöglichen. Es wurde festgestellt, dass das PET-Material dabei biegsam und robust bleibt, wobei ein Bleicheffekt beobachtet wurde. Die Ozonbehandlung wurde auch mit einem Wasserdampf/Ozon-Gemisch durchgeführt. In Versuchen wurde festgestellt, dass eine Behandlung des PET-Materials bei 180-230 °C keine negativen Auswirkungen auf das Material hatte. Bei noch höheren Temperaturen zersetzt sich aber das Ozon zu Sauerstoff.

Im Dokument EP 0602505 wird ein Ozon-bildender UV-Licht-Strahler zur Behandlung von Flüssigkeiten zur Schadstoffreduktion beschrieben.

Das Dokument EP 3705252 A1 beschreibt ein Verfahren zur Herstellung eines Plastikmaterials aus Kunststoffabfällen. Dieses Verfahren umfasst das Auswählen von Industrie- oder Post-Consumer Kunststoffabfällen, das Vermahlen der Abfälle, die Behandlung der Abfälle zur Reduzierung der von den Abfällen erzeugten Gerüche, die Behandlung der Abfälle zur Reduzierung der mikrobiellen Belastung, das Tempern der Abfälle in Wasser, die Regranulierung der Abfälle und die Entfeuchtung des Granulats. Zur Geruchsreduzierung und zur Reduzierung der mikrobiellen Belastung kann eine nicht näher erläuterte Ozonisierung angewandt werden.

Nachteilig an diesem bekannten Verfahren ist, dass die Behandlung zur Reduzierung der Gerüche und mikrobiellen Belastung nur an den gemahlenen Abfällen durchgeführt wird. Es ist aber bekannt, dass insbesondere apolare Verbindungen in den Kunststoff migrieren, siehe z.B. Resources, Conservation & Recycling 161 (2020) "Development and application of an analytical method to quantify odour removal in plastic waste recycling processes". Beim Regranulieren sowie bei der Weiterverarbeitung von Regranulat können Verunreinigungen freigesetzt werden, die ihrerseits eine Geruchsbelastung darstellen und daher die Verwendung des Regranulats für höherwertige Anwendungen, insbesondere für die Herstellung von Verpackungen für Lebensmittel, verhindern.

Es besteht daher nach wie vor ein Bedarf an einem effizienten und gleichzeitig umweltschonenden Prozess zur Aufbereitung von Post-Consumer Abfällen, welcher geruchsneutrales Regranulat liefern kann, sowie an Vorrichtungen zur Durchführung dieses Prozesses.

Die vorliegende Erfindung löst die gestellte Aufgabe durch Bereitstellen einer Vorrichtung zur Wiederaufbereitung von Flakes aus zerkleinerten und gewaschenen Post-Consumer Kunststoffabfällen mit den Merkmalen des Anspruchs 1 und durch Bereitstellen eines Verfahrens zur Wiederaufbereitung von Flakes aus zerkleinerten und gewaschenen Post-Consumer Kunststoffabfällen mit den Merkmalen des Anspruchs 10. Ausführungsformen der Erfindung sind in den Unteransprüchen, der Beschreibung und den Zeichnungen definiert.

Die erfindungsgemäße Vorrichtung zur Wiederaufbereitung von Flakes aus zerkleinerten und gewaschenen Post-Consumer Kunststoffabfällen umfasst:
eine Vorbehandlungseinheit zur Trocknung und Homogenisierung der Flakes aus zerkleinerten und gewaschenen Post-Consumer Kunststoffabfällen,
einen stromabwärts von der Vorbehandlungseinheit angeordneten Aufschmelzextruder zum Aufschmelzen der in der Vorbehandlungseinheit getrockneten und homogenisierten Kunststoffabfälle,
einen stromabwärts vom Aufschmelzextruder angeordneten Entgasungsextruder zum Entgasen der Kunststoffschmelze,
gegebenenfalls einen zwischen dem Aufschmelzextruder und dem Entgasungsextruder angeordneten Schmelzefilter zum Entfernen von Fremdkörpern aus der Kunststoffschmelze, eine stromabwärts vom Entgasungsextruder angeordnete Granuliervorrichtung zur Granulierung der Kunststoffschmelze,
eine stromabwärts von der Granuliervorrichtung angeordnete Nachbehandlungseinheit,
und gegebenenfalls eine zwischen der Granuliervorrichtung und der Nachbehandlungseinheit angeordnete Trocknungseinrichtung zur Trocknung des Granulats.

An einem den Aufschmelzextruder, den Entgasungsextruder, gegebenenfalls den Schmelzefilter, sowie die Verbindungsleitungen dazwischen umfassenden Kunststoffschmelzepfad sind zumindest ein Prozessgaszulauf und zumindest ein Gasablauf zum Austragen eines Abgasstroms vorgesehen, wobei der zumindest eine Prozessgaszulauf mit einer Ozonquelle oder einer Ozonerzeugungsvorrichtung verbunden ist, wodurch dem Kunststoffschmelzepfad mit Ozon angereichertes Prozessgas zuführbar ist.

Somit kann einerseits eine Ozonquelle (z.B. in Form einer Gasflasche, gefüllt mit einem mit Ozon angereicherten Gas, z.B. mit Ozon angereicherte Druckluft) an den Kunststoffschmelzepfad angeschlossen werden. Der Begriff "Ozonquelle" bedeutet nicht, dass diese Quelle reines Ozon bereitstellt. Andererseits kann eine Ozonerzeugungsvorrichtung an den Kunststoffschmelzepfad angeschlossen sein, wobei die Ozonerzeugungsvorrichtung Umgebungsluft als Prozessgas ansaugt oder dem Prozessgaszulauf entnimmt und mit Ozon anreichert, indem sie den in der Luft enthaltenen Sauerstoff unter elektrischer Spannung oder UV-Strahlung zu Ozon reagiert.

Das erfindungsgemäße Verfahren zur Wiederaufbereitung von Flakes aus zerkleinerten und gewaschenen Post-Consumer Kunststoffabfällen umfasst:
das Trocknen und Homogenisieren der Flakes aus zerkleinerten und gewaschenen Post-Consumer Kunststoffabfällen in einem Gasstrom, insbesondere einem Heißgasstrom,
das Aufschmelzen der getrockneten und homogenisierten Kunststoffabfälle zu einer Kunststoffschmelze,
optional das Ausfiltern von Fremdkörpern aus der Kunststoffschmelze,
das Entgasen der Kunststoffschmelze,
das Granulieren der Kunststoffschmelze,
optional das Trocknen des Granulats, und
das Entfernen von Gerüchen aus der Kunststoffschmelze durch einen mit Ozon angereicherten Prozessgasstrom, der die Kunststoffschmelze durchströmt.

Durch das Zuführen des mit Ozon angereicherten Prozessgasstroms wird die Kunststoffschmelze aufschäumen gelassen, wodurch sich ihre Oberfläche, die dem Ozon im Prozessgas ausgesetzt ist, auf ein Vielfaches vergrößert.

Die vorliegende Erfindung ermöglicht es, Geruchsstoffe zielgerichtet aus Post-Consumer Abfällen zu entfernen. Das Ausmaß an verbleibenden Restgerüchen des aus der erfindungsgemäß geruchsbehandelten Kunststoffschmelze hergestellten Granulats kann auf verschiedene Arten bestimmt werden. Man kann beispielsweise verschiedene Proben des Granulats in verdünnter oder unverdünnter Luft durch ein Gremium von Testpersonen bewerten lassen, die für diese Aufgabe geschult sind. Alternativ dazu können materialspezifische Indikatoren festgelegt und über die verbleibende Restmenge nach dem erfolgten Geruchsentfernungsprozess bewertet werden. Darüber hinaus lässt sich bei einer gaschromatografischen Analyse auch noch die Reinigungseffizienz auf einzelne Substanzen auswerten.

Bevorzugt ist ein Prozessgaszulauf an den Aufschmelzextruder angeschlossen, um der Kunststoffschmelze möglichst weit stromaufwärts das Prozessgas zuzuführen, so dass die Zeitdauer, in der das Prozessgas mit den in der Kunststoffschmelze enthaltenen Geruchsstoffen der Kunststoffschmelze reagieren kann, möglichst lange ist. Für beste Wirkung des mit dem Prozessgas eingebrachten Ozons ist es bevorzugt, wenn dieser Anschluss im Einzugsbereich des Aufschmelzextruders angeordnet ist, weil dadurch die Post-Consumer Kunststoffabfälle schon von der Übergabe aus dem Reaktor an mit Ozon in Kontakt stehen.

Zusätzlich oder alternativ dazu kann vorgesehen sein, dass ein Prozessgaszulauf an eine Verbindungsleitung stromaufwärts vom Entgasungsextruder angeschlossen ist.Durch das zugeführte Prozessgas wird die Kunststoffschmelze aufschäumen gelassen, was zu einer Oberflächenerhöhung der Kunststoffschmelze führt, so dass das Prozessgas besser mit den in der Kunststoffmschmelze enthaltenen Geruchsstoffen in Interaktion treten kann. Ein weiterer Vorteil dieser Ausführungsform liegt darin, dass die hohe Temperatur der Kunststoffschmelze die Oxidation der Geruchsstoffe durch Ozon begünstigt. Folglich wird die zum Aufschmelzen eingebrachte Energie auch zur Geruchsentfernung genutzt, was besonders Energie sparend ist.

In einer bevorzugten Ausgestaltung der Erfindung ist ein Gasablauf an den Entgasungsextruder angeschlossen.

Bei der Wiederverwertung von Post-Consumer Kunststoffabfällen ist es zweckmäßig, zwischen dem Aufschmelzextruder und dem Entgasungsextruder einen Schmelzefilter zum Entfernen von Fremdkörpern aus der Kunststoffschmelze anzuordnen.

Wenn die Granuliervorrichtung zur Granulierung der Kunststoffschmelze eine Nass-Granuliervorrichtung ist, ist es zweckmäßig, nach der Granuliervorrichtung eine Trocknungseinrichtung zur Trocknung des Granulats, z.B. eine Trocknungszentrifuge, vorzusehen, damit das Granulat der Nachbehandlungseinheit in weitgehend trockenem Zustand zugeführt wird.

Bevorzugt ist das mit Ozon anzureichernde Prozessgas Luft, wobei auch, gegebenenfalls gefilterte, Umgebungsluft verwendet werden kann.

Es hat sich gezeigt, dass die Ozonkonzentration im angereicherten Prozessgas zumindest 0,1 ppm betragen und vorzugsweise in einem Bereich zwischen 10 ppm und 100 ppm liegen sollte, um ausreichende Geruchsentfernung zu erzielen, ohne die Umwelt nennenswert zu belasten.

Es kann eine einzige Ozonquelle oder Ozonerzeugungsvorrichtung verwendet werden, um alle genannten Verfahrensschritte bzw. Vorrichtungsteile mit Ozon zu versorgen. Alternativ dazu können mehrere Ozonquellen oder Ozonerzeugungsvorrichtungen vorgesehen werden.

Um beste Geruchsentfernungswirkung zu erzielen, sowie gleichzeitig die Ozonbelastung der Umwelt zu minimieren, ist es erfindungsgemäß bevorzugt, eine Einstellvorrichtung zur Einstellung der Ozonmenge, die dem Kunststoffschmelzepfad zugeführt wird, in Abhängigkeit von der Ozonkonzentration des Abgasstroms aus dem Kunststoffschmelzepfad vorzusehen. Für die Geruchsentfernungswirkung ist die absolute Ozonmenge entscheidend, also wie viele Moleküle Ozon insgesamt auf die in der Kunststoffschmelze vorhandenen Geruchsstoffmoleküle treffen (g Ozon/kg Kunststoff).

Die zugeführte Ozonmenge kann durch die Einstellvorrichtung auf unterschiedliche Weise beeinflusst werden:
- Entweder, indem die Ozonkonzentration des zugeführten Prozessgases verändert wird; oder
- indem die Strömungsgeschwindigkeit des Prozessgases manipuliert wird.

Um diese Einstellung möglichst exakt, schnell und automatisiert durchzuführen, sieht die Erfindung ergänzend eine Inlinemesseinrichtung zur Messung der Ozonkonzentration des Abgasstroms aus der Kunststoffschmelze vor, wobei die Inline-Messeinrichtung die Einstellvorrichtung zur Einstellung der dem Kunststoffschmelzepfad zugeführten Ozonmenge in Abhängigkeit von der gemessenen Ozonkonzentration steuert. Dadurch wird einerseits ausreichend Ozon produziert bzw. dem Prozessgasstrom zugeführt, um geruchsbildende Stoffe durch Oxidation zu entfernen, gleichzeitig wird durch die Inlinemessung und Regelung die emittierte Menge an Ozon gering gehalten. Die benötigte Ozonkonzentration des zugeführten Prozessgases ist abhängig von der Kontaminationsintensität der Kunststoffschmelze bzw. deren Geruchsintensität. Ist die Kunststoffschmelze stärker kontaminiert, wird mehr Ozon bei der Behandlung (Reaktion mit den Geruchsstoffen) verbraucht. Am Abgasstrom wird die verbliebene Ozonkonzentration gemessen. Wird ein bestimmter Schwellenwert der Ozonkonzentration im Abgasstrom überschritten, so wird die dem Prozessgas oder als Prozessgas zugeführte Ozonmenge gedrosselt, bis der Schwellenwert der Ozonkonzentration in dem Abgasstrom wieder unterschritten wird.

Mit dieser Regelung kann verhindert werden, dass überschüssiges Ozon produziert und in Folge in die Umwelt freigesetzt wird.

Grundsätzlich kann der ablaufende chemische Prozess wie folgt dargestellt werden:

O₃ (Ozoninput) + X → O-X + O₂

wobei: X Geruchsstoff
O-X oxidierter Geruchsstoff

Wenn genügend Geruchsstoffe als Reaktionspartner für das Ozon vorhanden sind, kann das Ozon vollständig abreagieren und dabei verbraucht werden. Im Abgasstrom finden sich dann die oxidierten Geruchsstoffe und Sauerstoff.

Wird jedoch mehr Ozon mit dem Prozessgas in den Kunststoffschmelzepfad eingespeist als mit den Geruchsstoffen, mit denen die Kunststoffschmelze beladen ist, reagieren kann, verlässt das Ozon über den Abgasstrom den Kunststoffschmelzepfad und ist dort messbar.

Das lässt sich vereinfacht folgendermaßen darstellen:

n O₃ (Ozoninput) + X → O-X + O₂ + (n-1) O₃ (mittels eines Sensors messbares Ozon im Abgasstrom)

wobei: n ≥ 2
X Geruchsstoff
O-X oxidierter Geruchsstoff

Dieser Fall tritt ein, wenn zu viel Ozon in den Kunststoffschmelzepfad eingespeist wird. Es sind die nachfolgenden Lösungen für dieses Problems vorgesehen:
Es wird zu Beginn des Prozesses Prozessgas mit niedriger Ozonkonzentration eingespeist. Wird im Abgasstrom kein Ozon gemessen, wird schrittweise die Ozonkonzentration des eingespeisten Prozessgases erhöht, bis im Abgasstrom eine bestimmte Ozonkonzentration (z.B. ein bestimmter Anteil der eingespeisten Menge) vorhanden ist. Dann wird die Ozonkonzentration des zugeführten Prozessgases konstant gehalten.

Alternativ oder zusätzlich kann man die Strömungsgeschwindigkeit des Prozessgasstroms verändern, um die Ozonmenge einzustellen. Dazu startet man mit einer bestimmten Flussrate des Prozessgasstroms und misst die Ozonkonzentration im Abgasstrom. Ist dort zu viel Ozon vorhanden, wird Schritt für Schritt die Flussrate reduziert, bis kein Ozon mehr im Abgasstrom messbar ist bzw. ein bestimmter Schwellenwert im Abgasstrom unterschritten wird. Dann wird die Flussrate konstant gehalten.

Anzumerken ist, dass die obigen Reaktionsgleichungen nur der Illustration dienen und vereinfacht sind, da sie nur einen Fall zeigen, in welchem der Geruchsstoff nur einmalig oxidiert wird. Tatsächlich werden die meisten Geruchsstoffe durch Ozon mehrfach oxidiert. Anders gesagt, es reagieren zwei oder mehr Ozonmoleküle mit einem Geruchsstoffmolekül. Das Prinzip bleibt aber dasselbe.

Die Inlinemesseinrichtung zur Messung der Ozonkonzentration des Abgasstroms aus dem Kunststoffschmelzepfad kann auch zur bloßen Messung der Ozonkonzentration vorgesehen sein, beispielsweise um behördliche Umweltauflagen zu erfüllen oder landesspezifische Grenzwerte einzuhalten

Um eine Umweltbelastung durch Ozon zu minimieren, ist in einer Ausführungsform der Erfindung optional zumindest eine Einrichtung zum zumindest teilweisen Abbau von im Abgasstrom enthaltenen Ozon vorgesehen, wobei die Einrichtung zum Abbau von Ozon bevorzugt zur thermischen oder katalytischen Behandlung des Abgasstroms oder zur Bestrahlung des Abgasstroms mit elektromagnetischen Wellen ausgebildet ist. Die elektromagnetischen Wellen sind vorzugsweise UV-Licht mit einer Wellenlänge von zumindest 254 nm.

Diese Einrichtung zum zumindest teilweisen Abbau von im Abgasstrom enthaltenen Ozon kann optional auf Basis der im Abgasstrom gemessenen Ozonkonzentration gesteuert ein- und ausgeschaltet oder geregelt werden.

Die Erfindung wird nachfolgend anhand beispielhafter Ausführungsformen unter Bezugnahme auf die Zeichnungen näher erläutert.
Fig. 1 zeigt schematisch eine erfindungsgemäße Vorrichtung zur Wiederaufbereitung von Flakes aus zerkleinerten und gewaschenen Post-Consumer Kunststoffabfällen.
Fig. 2 zeigt eine mögliche Ausführungsform eines Details der Vorrichtung von Fig. 1.

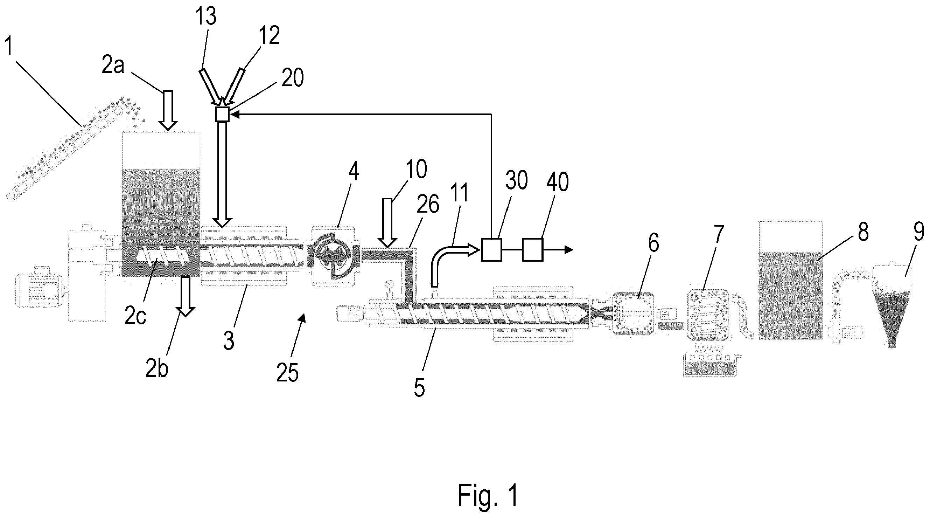

Die in Fig. 1 schematisch dargestellte Vorrichtung zur Wiederaufbereitung von Flakes aus zerkleinerten und gewaschenen Post-Consumer Kunststoffabfällen weist eine Vorbehandlungseinheit 2 zur Trocknung und Homogenisierung der Flakes aus zerkleinerten und gewaschenen Post-Consumer Kunststoffabfällen auf, wobei die Beschickung der Vorbehandlungseinheit 2 mit Flakes durch eine Beschickungseinheit 1 in Form einer Förderschnecke erfolgt. Die Vorbehandlungseinheit 2 weist einen Gaszulauf 2a, der bevorzugt als Heißgaszulauf ausgestaltet ist, und einen Gasablauf 2b auf. Gas, bevorzugt Heißluft, wird durch den Gaszulauf 2a hindurch in die Vorbehandlungseinheit 2 zugeführt, in der sich die Flakes befinden. Mit dem zugeführten Gasstrom werden die Flakes getrocknet und homogenisiert. Der mit Feuchtigkeit und eventuell Kontaminationen beladene Gasstrom wird durch den Gasablauf 2b hindurch ausgetragen. Die Austragung der Flakes aus der Vorbehandlungseinheit erfolgt durch eine Förderschnecke 2c in einen Aufschmelzextruder 3, der stromabwärts von der Vorbehandlungseinheit 2 angeordnet ist. Im Aufschmelzextruder 3 werden die getrockneten und homogenisierten Flakes aus Kunststoffabfällen aufgeschmolzen. Stromabwärts vom Aufschmelzextruder 3 ist ein Schmelzefilter 4 zum Entfernen von Fremdkörpern aus der Kunststoffschmelze angeordnet.

Stromabwärts vom Schmelzefilter 4 befindet sich ein Entgasungsextruder 5 zum Entgasen der Kunststoffschmelze. Der Aufschmelzextruder 3, der Schmelzefilter 4, der Entgasungsextruder 5 sowie die zwischen die genannten Einrichtungen geschalteten Verbindungsleitungen 26 definieren einen Kunststoffschmelzepfad 25. Allgemein gesprochen erstreckt sich der Kunststoffschmelzepfad 25 vom Aufschmelzextruder 3 bis zu einer Granuliervorrichtung 6 zur Granulierung der Kunststoffschmelze, die stromabwärts vom Entgasungsextruder 5 angeordnet ist. Das in der Granuliervorrichtung 6 hergestellte Granulat wird in einer Trocknungszentrifuge 7 getrocknet und anschließend einer Nachbehandlungseinheit 8 zugeführt, wo das Granulat Nachbehandlungen unterzogen werden kann, wie einer Temperierbehandlung, einer Behandlung zur Erhöhung des iV-Werts, oder auch einer ergänzenden Geruchsentfernungsbehandlung. Nach der Nachbehandlung wird das Granulat aus der Nachbehandlungseinheit 8 ausgetragen und kann dann entweder direkt verarbeitet oder einem Vorratssilo 9 zugeführt werden.

Der Kunststoffschmelzepfad 25 weist zumindest einen Prozessgaszulauf 10 und einen Gasablauf 11 zum Austragen eines Abgasstroms auf, wobei der Prozessgaszulauf 10 des Kunststoffschmelzepfads 25 mit einer Ozonquelle 12, z.B. in Form eines Behälters, der mit einem mit Ozon angereicherten Gas gefüllt ist, z.B. mit Ozon angereicherte Druckluft, oder einer Ozonerzeugungsvorrichtung 13 verbunden ist, wodurch dem Kunststoffschmelzepfad 25 mit Ozon angereichertes Prozessgas zur Entfernung von Gerüchen aus der Kunststoffschmelze zuführbar ist. Im dargestellten Ausführungsbeispiel ist ein Prozessgaszulauf 10 an den Einzugsbereich des Aufschmelzextruders 3 angeschlossen. Ein weiterer Prozessgaszulauf 10 ist an die Verbindungsleitung 26 stromaufwärts vom Entgasungsextruder 5 angeschlossen und dient zum Aufschäumen der Kunststoffschmelze im Kunststoffschmelzepfad 25. Ein Gasablauf 11 ist an den Entgasungsextruder 5 angeschlossen. Aus dem Gasablauf 11 wird das verbrauchte Prozessgas als Abgasstrom abgezogen.

Eine Einstellvorrichtung 20 dient zur Einstellung der Ozonmenge, die dem Kunststoffschmelzepfad 25 zugeführt wird, in Abhängigkeit von der Ozonkonzentration des Abgasstroms aus dem Gasablauf 11. Die Einstellung der zuzuführenden Ozonmenge erfolgt beispielsweise durch ein von der Einstellvorrichtung 20 betätigtes Regelventil im Prozessgaszulauf 10. Die Einstellvorrichtung 20 kann als elektronischer Regler mit einem Mikroprozessor, einem Arbeitsspeicher, einem Programmspeicher, in dem ein Regelalgorithmus abgespeichert ist, und Interfaces zur Kommunikation und zur Betätigung des genannten Regelventils ausgeführt sein. Die Ozonerzeugungsvorrichtung 13 kann so ausgeführt sein, dass sie die Umgebungsluft unter elektrische Spannung setzt, sodass der Sauerstoff in der Umgebungsluft zu Ozon reagiert. Je höher die elektrische Spannung, desto mehr Ozon entsteht. So kann durch Regelung der elektrischen Spannung die Ozonkonzentration des die Ozonerzeugungsvorrichtung 13 verlassenden Gases geregelt werden. Die Regelung der Ozonerzeugungsvorrichtung 13 zur Erzeugung und Variierung der elektrischen Spannung kann durch die Einstellvorrichtung 20 erfolgen.

Alternativ dazu kann die Ozonerzeugungsvorrichtung 13 auf Basis von Bestrahlung von angesaugter Umgebungsluft mit UV-Licht, vorzugsweise mit einer Wellenlänge kleiner als 240 nm erfolgen. Bei einer solchen Ozonerzeugungsvorrichtung 13 wird die Ozonkonzentration des die Ozonerzeugungsvorrichtung 13 verlassenden Gases geregelt, indem die Wellenlänge des UV-Lichtes verändert wird. Auch diese Regelung kann mit der Einstellvorrichtung 20 erfolgen. Da UV-Licht kürzerer Wellenlänge energiereicher ist, wird damit mehr Ozon erzeugt als bei Bestrahlung mit UV-Licht längerer Wellenlänge.

Bevorzugt wird die Einstellvorrichtung 20 durch eine Inlinemesseinrichtung 30 zur Messung der Ozonkonzentration des Abgasstroms aus dem Gasablauf 11 gesteuert, wobei die Steuerung der Einstellvorrichtung 20 zur Einstellung der dem Kunststoffschmelzepfad 25 zugeführten Ozonmenge in Abhängigkeit von der gemessenen Ozonkonzentration erfolgt. Mit einer solchen Konfiguration sind die oben beschriebenen Prozesse zur Geruchsentfernung bei gleichzeitig geringer Ozonbelastung der Umgebung durchführbar. Die Inlinemesseinrichtung 30 kann direkt im oder am Gasablauf 11 angeordnet sein, oder alternativ dazu vom Gasablauf 11 entfernt angeordnet sein, aber über einen Ozonsensor verfügen, der in den Gasablauf 11 eingebaut ist.

Am Gasablauf 11 ist optional eine Einrichtung 40 zum zumindest teilweisen Abbau von im Abgasstrom enthaltenen Ozon vorgesehen, wobei die Einrichtung 40 zum Abbau von Ozon bevorzugt zur thermischen oder katalytischen Behandlung des Abgasstroms oder zur Bestrahlung des Abgasstroms mit elektromagnetischen Wellen ausgebildet ist. Wenn der Abbau von Ozon durch Bestrahlung des abgezogenen Prozessgases mit elektromagnetischen Wellen erfolgt, so wird vorzugsweise UV-Licht mit einer Wellenlänge von zumindest 254 nm verwendet.

Aufgrund seiner einfachen Handhabbarkeit ist das mit Ozon anzureichernde Prozessgas bevorzugt Luft. Die Ozonkonzentration im angereicherten Prozessgas sollte zumindest 0,1 ppm betragen und vorzugsweise in einem Bereich zwischen 10 ppm und 100 ppm liegen.

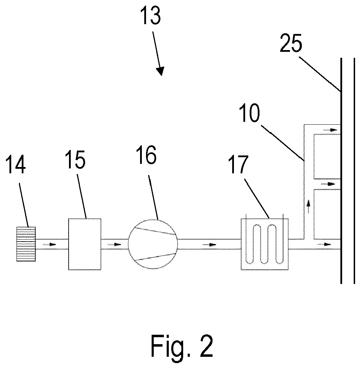

In Fig. 2 ist schematisch eine erfindungsgemäße Ausführungsform der Ozongaserzeugungsvorrichtung 13 dargestellt, die aus der Umgebungsluft Ozon gewinnt. Diese Ozongaserzeugungsvorrichtung 13 umfasst einen Luftfilter 14, der mit der Umgebungsluft in Verbindung steht und Staub, etc. aus der Umgebungsluft ausfiltert. Die solcherart gereinigte Umgebungsluft wird einem Ozongenerator 15 zugeführt, der nach dem Fachmann bekannten Prinzipien einen Teil der Umgebungsluft in Ozon umwandelt und dadurch mit Ozon angereicherte Luft als Prozessgas erzeugt. Der Ausgang des Ozongenerators 15 ist mit dem Eingang, d.h. der Ansaugseite, eines Gebläses 16 verbunden. Das Gebläse 16 bewirkt einerseits die Ansaugung von Luft durch den Luftfilter 14 und den Ozongenerator 15 hindurch, und bläst andererseits das Prozessgas durch eine Heizung 17 in den Prozessgaszulauf 10 und von dort in den Kunststoffschmelzepfad 25. Das Prozessgas, dessen Ozon-Anteil durch die Geruchsentfernung verbraucht worden ist, verlässt als Abgasstrom den Kunststoffschmelzepfad 25 durch den Gasablauf 11 und gelangt in die Einrichtung 40 zum Abbau von Ozon, wo überschüssiges Ozon reduziert wird. Der Gasablauf 11 befindet sich vorzugsweise am Entgasungsextruder 5.

Angemerkt wird, dass der Begriff "Ozongaserzeugungsvorrichtung" nicht dahingehend zu verstehen ist, dass diese Vorrichtung reines Ozon erzeugt. Vielmehr ist mit dem Begriff "Ozongaserzeugungsvorrichtung" gemeint, dass die Vorrichtung mit Ozon angereichertes Gas, insbesondere mit Ozon angereicherte Luft erzeugt.

## Patentansprüche

1. Vorrichtung zur Wiederaufbereitung von Flakes aus zerkleinerten und gewaschenen Post-Consumer Kunststoffabfällen, umfassend:
eine Vorbehandlungseinheit (2) zur Trocknung und Homogenisierung der Flakes aus zerkleinerten und gewaschenen Post-Consumer Kunststoffabfällen,
einen stromabwärts von der Vorbehandlungseinheit (2) angeordneten Aufschmelzextruder (3) zum Aufschmelzen der in der Vorbehandlungseinheit (2) getrockneten und homogenisierten Kunststoffabfälle,
einen stromabwärts vom Aufschmelzextruder (3) angeordneten Entgasungsextruder (5) zum Entgasen der Kunststoffschmelze,
gegebenenfalls einen zwischen dem Aufschmelzextruder (3) und dem Entgasungsextruder (5) angeordneten Schmelzefilter (4) zum Entfernen von Fremdkörpern aus der Kunststoffschmelze,
eine stromabwärts vom Entgasungsextruder (5) angeordnete Granuliervorrichtung (6) zur Granulierung der Kunststoffschmelze,
eine stromabwärts von der Granuliervorrichtung (6) angeordnete Nachbehandlungseinheit (8),
und gegebenenfalls eine zwischen der Granuliervorrichtung (6) und der Nachbehandlungseinheit (8) angeordnete Trocknungseinrichtung (7) zur Trocknung des Granulats,
**dadurch gekennzeichnet, dass**
an einem den Aufschmelzextruder (3), den Entgasungsextruder (5), gegebenenfalls den Schmelzefilter (4), sowie die Verbindungsleitungen (26) dazwischen umfassenden Kunststoffschmelzepfad (25) zumindest ein Prozessgaszulauf (10) und zumindest ein Gasablauf (11) zum Austragen eines Abgasstroms vorgesehen sind, wobei der zumindest eine Prozessgaszulauf (10) mit einer Ozonquelle (12) oder einer Ozonerzeugungsvorrichtung (13) verbunden ist, wodurch dem Kunststoffschmelzepfad (25) mit Ozon angereichertes Prozessgas zuführbar ist.

2. Vorrichtung nach Anspruch 1, dass ein Prozessgaszulauf (10) an den Aufschmelzextruder (3) angeschlossen ist.

3. Vorrichtung nach Anspruch 1 oder 2, **dadurch gekennzeichnet, dass** ein Prozessgaszulauf (10) an eine Verbindungsleitung (26) stromaufwärts vom Entgasungsextruder (5) angeschlossen ist.

4. Vorrichtung nach einem der vorhergehenden Ansprüche, **dadurch gekennzeichnet, dass** ein Gasablauf (11) an den Entgasungsextruder (5) angeschlossen ist.

5. Vorrichtung nach einem der vorhergehenden Ansprüche, **gekennzeichnet durch** eine Inlinemesseinrichtung (30) zur Messung der Ozonkonzentration des Abgasstroms aus dem Kunststoffschmelzepfad (25).

6. Vorrichtung nach einem der vorhergehenden Ansprüche, **gekennzeichnet durch** eine Einstellvorrichtung (20) zur Einstellung der Ozonmenge, die dem Kunststoffschmelzepfad (25) zugeführt wird, in Abhängigkeit von der Ozonkonzentration des Abgasstroms aus dem Kunststoffschmelzepfad (25).

7. Vorrichtung nach einem der vorhergehenden Ansprüche, **dadurch gekennzeichnet, dass** die Vorrichtung zumindest eine Einrichtung (40) zum zumindest teilweisen Abbau von im Abgasstrom enthaltenen Ozon aufweist, wobei die Einrichtung (40) zum Abbau von Ozon bevorzugt zur thermischen oder katalytischen Behandlung des Abgasstroms oder zur Bestrahlung des Abgasstroms mit elektromagnetischen Wellen ausgebildet ist.

8. Vorrichtung nach einem der vorhergehenden Ansprüche, **dadurch gekennzeichnet, dass** das mit Ozon anzureichernde Prozessgas Luft ist.

9. Vorrichtung nach einem der vorhergehenden Ansprüche, **dadurch gekennzeichnet, dass** die Ozonkonzentration im angereicherten Prozessgas zumindest 0,1 ppm beträgt und vorzugsweise in einem Bereich zwischen 10 ppm und 100 ppm liegt.

10. Verfahren zur Wiederaufbereitung von Flakes aus zerkleinerten und gewaschenen Post-Consumer Kunststoffabfällen, umfassend:
das Trocknen und Homogenisieren der Flakes aus zerkleinerten und gewaschenen Post-Consumer Kunststoffabfällen in einem Gasstrom, insbesondere einem Heißgasstrom,
das Aufschmelzen der getrockneten und homogenisierten Kunststoffabfälle zu einer Kunststoffschmelze,
optional das Ausfiltern von Fremdkörpern aus der Kunststoffschmelze,
das Entgasen der Kunststoffschmelze,
das Granulieren der Kunststoffschmelze,
optional das Trocknen des Granulats,
**gekennzeichnet durch**
das Entfernen von Gerüchen aus der Kunststoffschmelze durch einen mit Ozon angereicherten Prozessgasstrom, der die Kunststoffschmelze durchströmt.

11. Verfahren nach Anspruch 10, **dadurch gekennzeichnet, dass** die Ozonmenge, die der Kunststoffschmelze zum Entfernen der Gerüche zugeführt wird, in Abhängigkeit von der Ozonkonzentration des Prozessgases beim Abziehen aus der Kunststoffschmelze eingestellt wird.

12. Verfahren nach Anspruch 10 oder 11, **dadurch gekennzeichnet, dass** das im abgezogenen Prozessgas enthaltene Ozon zumindest teilweise abgebaut wird, wobei der Abbau von Ozon bevorzugt durch thermische oder katalytische Behandlung des abgezogenen Prozessgases erfolgt.

13. Verfahren nach Anspruch 10 oder 11, **dadurch gekennzeichnet, dass** das im abgezogenen Prozessgas enthaltene Ozon zumindest teilweise abgebaut wird, wobei der Abbau von Ozon durch Bestrahlung des abgezogenen Prozessgases mit elektromagnetischen Wellen erfolgt, wobei die elektromagnetischen Wellen vorzugsweise UV-Licht mit einer Wellenlänge von zumindest 254 nm sind.

14. Verfahren nach Anspruch 12 oder 13, **dadurch gekennzeichnet, dass** der Abbau von Ozon im abgezogenen Prozessgas in Abhängigkeit von der im Abgasstrom gemessenen Ozonkonzentration vorgenommen wird.

15. Verfahren nach einem der Ansprüche 10 bis 14, **dadurch gekennzeichnet, dass** das mit Ozon anzureichernde Prozessgas Luft ist.

16. Verfahren nach einem der Ansprüche 10 bis 15, **dadurch gekennzeichnet, dass** die Ozonkonzentration im angereicherten Prozessgas zumindest 0,1 ppm beträgt und vorzugsweise in einem Bereich zwischen 10 ppm und 100 ppm liegt.
